# EUROPEAN PATENT SPECIFICATION

(11) **EP 2 960 557 B1**
(45) Date of publication and mention of the grant of the patent: **28.03.2018**
(21) Application number: 15173291.4
(22) Date of filing: 23.06.2015
(51) Int. Cl.: F16J 15/34

(54) **MECHANICAL SEAL**
GLEITRINGDICHTUNG
GARNITURE DE JOINT MECANIQUE

(30) Priority: 23.06.2014 IT MI20141136
(43) Date of publication of application: 30.12.2015
(73) Proprietor: Fluiten Italia S.p.A., 20154 Milano (IT)
(72) Inventor: COLOMBO, Alberto Delfo, 20154 MILANO (IT)
(74) Representative: Inchingalo, Simona

(56) References cited:
- WO-A1-2009/074648
- FR-A- 1 333 612

## Description

The present invention relates to a mechanical seal.

The mechanical seals are devices applicable to rotary shafts to prevent leakage of fluid and able to withstand high pressures and mechanical stresses.

Mechanical seals are used, for example, in centrifugal pumps and motor boats in which the shaft transmits the rotary motion from the motor, placed inside the boat, to the propeller, completely immersed in water, to prevent the entry of liquid inside the boat through the passage of the motor shaft.

In the past, in order to generate the seal, a packing was used, i.e. a braid of hemp lint maintained around the motor shaft by a stuffing box, allowing the rotation of the shaft while avoiding a significant leakage. A small leakage is permissible, because it must allow the rotation and act as a lubricant.

Nowadays, the mechanical seal is made by a pair of ring-shaped bodies, a stationary body and a rotating sealing body, which are placed around a motor shaft and in relative motion relative to one another when the shaft motor is driven; the two ring-shaped bodies are coaxial and coupled frontally so that a circular crown face is in contact with that of the adjacent ring-shaped body.

The rotating ring-shaped body is kept in contact with the stationary body via a set of springs and by the pressure of the fluid to be sealed, which push it axially against the stationary body.

During the rotation, a minimal amount of fluid, sufficient to lubricate and prevent overheating, passes through the two ring-shaped bodies without however escaping into the environment to be isolated.

The springs are packaged between a main ring-shaped body and a thrust ring, connected coaxially to the first one, in such a way as to be free to perform a limited and controlled translational in the axial direction, where the axial direction means the direction of the axis passing through the center of symmetry of the rings and parallel to the axis of rotation of the motor shaft.

Finally, at least one ring-shaped seal, such as an O-ring or the like, is placed around the shaft to generate the seal on the shaft.

In the known and normally used mechanical seals (see WO-A-2009/074648), the main body has a plurality of appendages extending in the axial direction, also known as "legs", having the function to create the constraint between the thrust ring and the main body, as well as to drawn in rotation the rotating ring.

These appendices, in fact, have on their inner face, facing towards the axis of symmetry of the ring, a shoulder against which the thrust ring abuts, which is pushed by the springs interposed between it and the main body, preventing their disengagement from the main ring-shaped body.

In some types of mechanical seals, the rotating ring is only associated with the main ring-shaped body without being in any way constrained to the latter.

In this case, on the circular outer surface of the sealing rotating ring a plurality of driving ring are formed, equal in number to the appendices, in which the latter are inserted, thereby combining the main body to the rotating ring. The interference between the side edge of the appendices and the walls of the grooves allows the drag of the sealing rotating ring with the main body.

The drive ring can thus slide axially with respect to the main body and abut against the stationary ring to ensure the seal.

In a similar way, in the absence of appendices or "legs", the drag may be achieved using dimples extending in the axial direction on the outer surface of the main body, which then form corresponding protrusions on the inner surface of the main body. These protrusions engage with respective recesses fashioned on the outer surface of rotating ring, thus promoting the latter to be dragged with the body.

Another embodiment comprises an appendix or "leg" equipped, at its free end, with a respective locking tooth facing towards the central axis of symmetry of the main body, against which a locking ring abuts, which is contained within the circular footprint delimited by the legs.

Against such a locking ring, also called elastic ring, on the side opposite to the side of engagement of the teeth of the legs, an undercut abuts that is formed on the outer surface of the rotating ring. In this way, an outermost portion of the rotating ring is corrected, thus assuming a smaller diameter than the innermost portion contained in the main body, so as to prevent the disengagement between the rotating ring and the main body. The rotating ring is thus kept and connected to the package with the main body and the thrust ring, while maintaining the possibility of relative axial translation between all the elements.

In all the described solutions some machining on the rotating ring are required, involving the removal of a considerable portion of the material, resulting in a reduction of thickness and a decrease in the mechanical strength.

Such surface working, which is necessary to make the recesses for accommodating the sealing shoulders or retaining rings, structurally weaken the rotating ring, to the disadvantage of the mechanical seal or the structural strength of the element itself.

The rotating ring, and more generally the mechanical seal, is less robust and less resistant to the high pressures, and withstand lower stresses and pressure limits.

Since the sealing is made by the sliding faces or surfaces in contact between the rotating ring and the stationary ring, a more or less thick sealing surface will be obtained, depending on the type of fluid to be isolated.

Also, because the seal must be dimensioned also according to the size available to accommodate the seal itself, in case of a little space available also the sliding surface will be reduced; in addition, if the rotating ring is not very robust, because it is worked externally to make the mentioned shoulders, serious problems in resistance and sealing will arise.

So, if the rotating ring is little robust due to the grinding operations, the sliding surface will have to be enlarged to ensure a good mechanical seal; on the contrary, if the rotating ring is robust, it can be machined even at high pressures and at narrowed and limited sealing surfaces, allowing also to comply with the regulations for the dimensions.

Furthermore, it must consider that the mechanical seals suffer much during the start-up: the rotating and the stationary rings are normally compressed and packaged to each other even at rest, because the springs, and sometimes also the fluid under pressure, push the rotating ring against the stationary ring.

Only when the motor shaft is rotating a small amount of fluid is interposed between the two rings to lubricate them. The static friction is very high and therefore the sealing or sliding surface is subject to great stress right during the start-up. If the rotating ring is constrained to the main body via the locking ring, its travel in the axial direction towards the stationary ring is limited, and therefore, with the use there will come a time when the sealing surface of the rotating ring will be worn and completely consumed, and the rotary ring cannot advance further against the stationary ring as the locking ring will hinder its movement.

The rotating ring will continue to rotate, however without establishing a seal, although upstream of the locking ring there is still some material, which may be consumed. These seals have therefore a limited life while being able to have a potentially longer one.

The object of the present invention is to provide a mechanical seal that overcomes the drawbacks of the described prior art.

Therefore, it is an object of the present invention to provide a mechanical seal that is structurally more robust, able to withstand higher stresses and greater pressure limits, ensuring performances greatly superior to existing mechanical seals, allowing to improve the overall performance of the seal and to ensure a greater versatility.

A further object of the invention is to provide a mechanical seal which does not suffer excessively from constraints due to the structural dimensioning, that is robust and high pressure-resistant, and that allows a greater flexibility in the dimensions of the sealing surface.

Lastly, an object of the present invention is also to provide a mechanical seal, which has a prolonged life compared to the mechanical seals currently on the market.

These and other objects are substantially achieved by a mechanical seal as described in one or more of the appended claims.

Further characteristics and advantages will become clearer from the detailed description of one preferred but not limitative embodiment of a mechanical seal according to the present invention.

This description is provided with reference to the accompanying figures, also provided only by way of example and not limitation, in which:
- Figure 1 is a schematic side sectional view of a mechanical seal as described in the present invention and keyed on a motor shaft;
- Figure 2 is a schematic sectional view of the mechanical seal illustrated in Figure 1, as described in the present invention, in a partially assembled configuration;
- Figure 3a shows a schematic front view of a part of the mechanical seal of the present invention;
- Figure 3b shows a schematic top view of the part of the mechanical seal shown in Figure 3a;
- Figure 3c is an enlargement of a detail of Figure 3a;
- Figure 4 shows the mechanical seal partially disassembled;
- Figures 5a, 5b and 5c are the three orthogonal projections of a connection element of the mechanical seal, illustrated enlarged in Figure 5c;

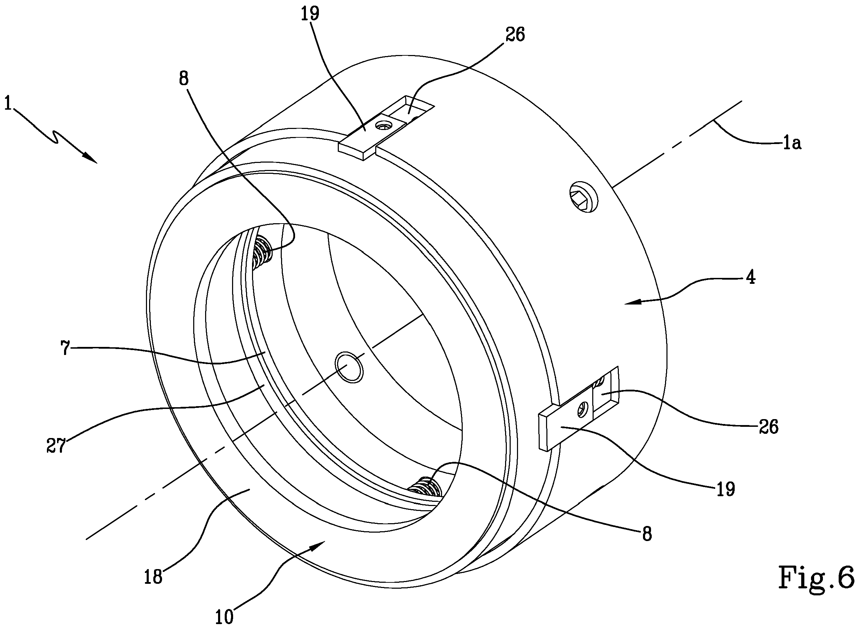

- Figure 6 is a perspective view of the completely assembled mechanical seal of the present invention, according to a first embodiment;

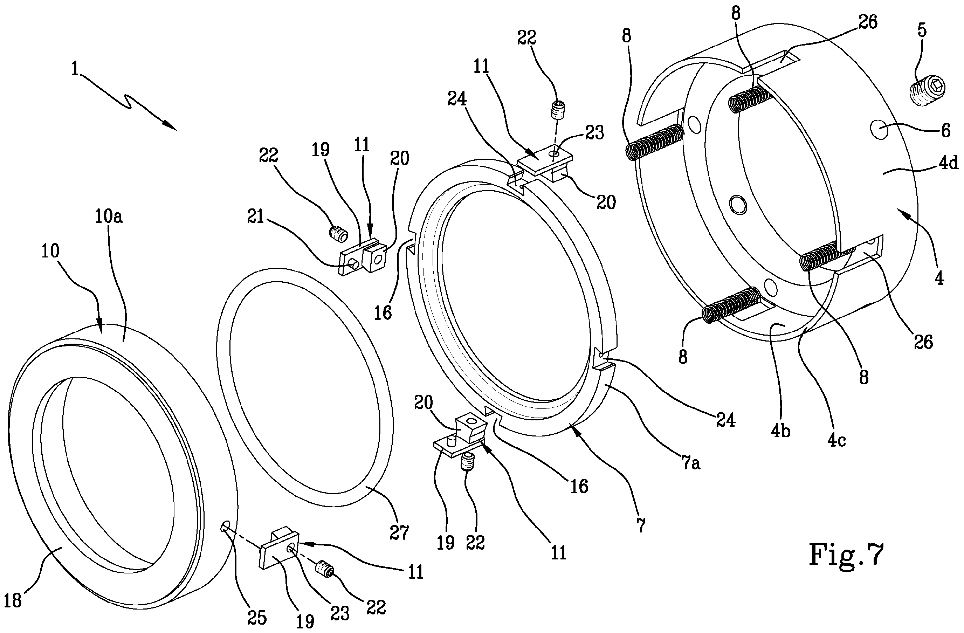

- Figure 7 is an exploded view of the mechanical seal of the present invention, as shown in Figure 6;
- Figure 8 is a perspective view of the completely assembled mechanical, according to a first embodiment;
- Figures 9a-9d are three orthogonal projections of a structural detail of the mechanical seal in Figure 8;
- Figure 10a shows a schematic front view of a part of the mechanical seal of the present invention, according to the embodiment shown in Figure 8;
- Figure 10b shows a schematic top view of the part of the mechanical seal shown in Figure 10a;

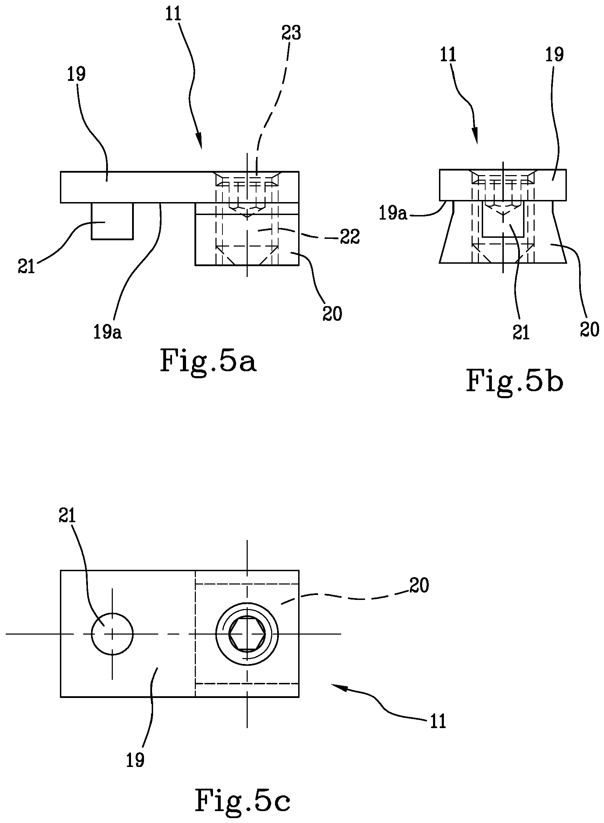

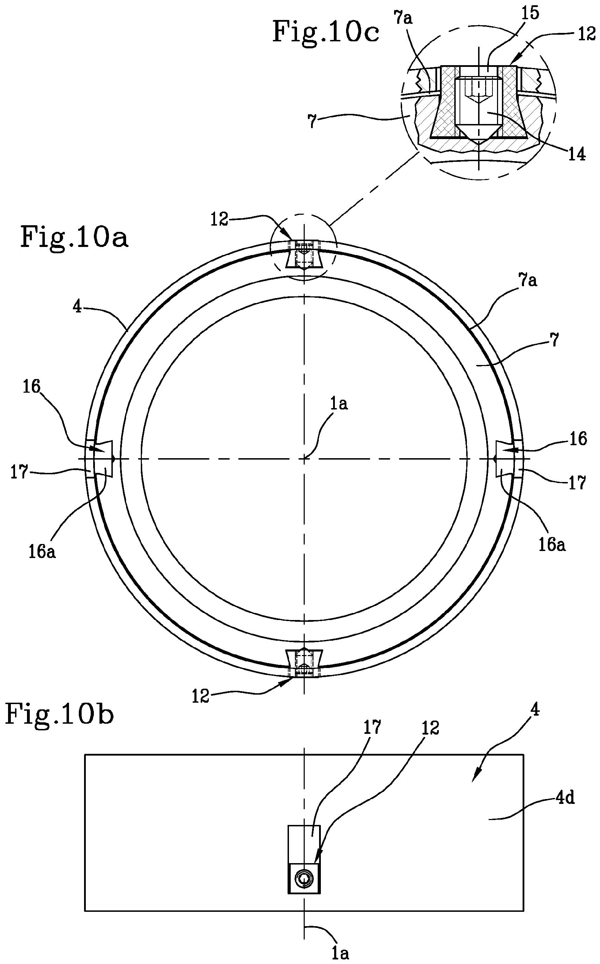

- Figure 5c is an enlargement of a detail of Figure 10a.

With reference to the figures described above, 1 refers to a mechanical seal in accordance with the present invention.

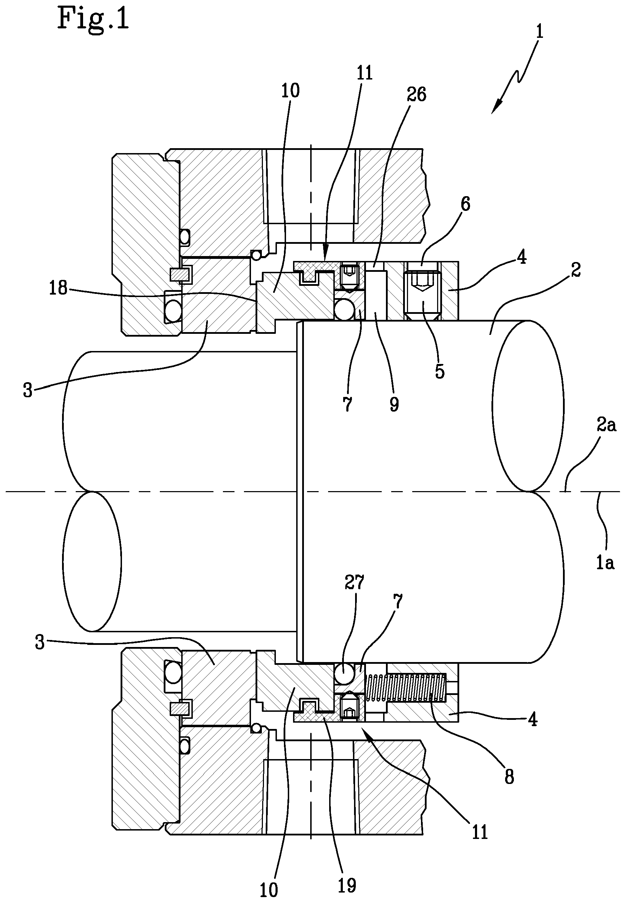

In Figure 1 the mechanical seal 1 of the present invention is shown keyed on a motor shaft 2.

As shown in Figure 1, the mechanical seal 1 is constrained to the motor shaft with which it is forced to rotate around the axis of rotation 2a, which is coincident with the axis of central symmetry 1a or of rotation of the mechanical seal 1 itself. In this Figure, a static part is also visible, in particular a stationary ring or seat 3, against which the mechanical seal 1 slides, as will be better described below.

The mechanical seal 1 comprising an main ring-shaped body 4 can be rigidly constrained to a motor shaft 2. Advantageously, the main ring-shaped body 4 is rigidly connected to the motor shaft 2 by means of fastening means, such as a grub screw 5 insertable radially into a suitably shaped through cavity 6, made in radial direction through the wall of the ring-shaped body 4 (Figures 1, 2, 4). Although in the appended figures a single grub screw 5 is always shown, the mechanical seal comprises at least two grub screws 5 in order to ensure a better grip of the ring-shaped body 4 on the motor shaft 2. In the preferred configuration, there are preferably three, angularly equidistant screws 5, for which reason in the illustrated sections there is only one visible grub screw 5.

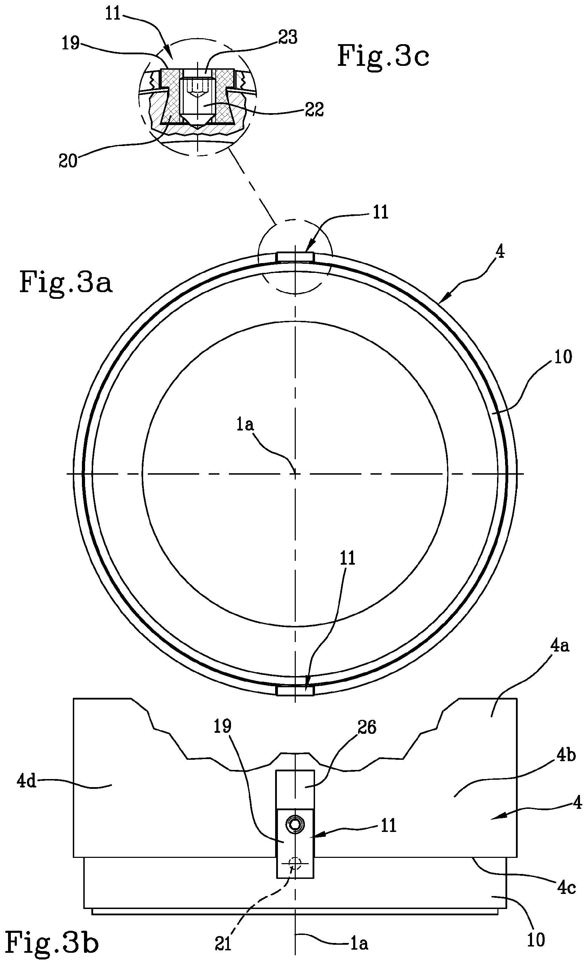

The ring-shaped body 4 preferably comprises a first portion 4a, which can be fitted directly on the motor shaft 2, having a greater thickness in the radial direction, and a second portion 4b, extending as an extension in the axial direction of the outer surface of the first portion 4a, having a lower thickness (clearly visible in Figure 3b).

The through cavity 6, inside which the grub screw 5 is insertable, which constrains the ring-shaped body 4 to the motor shaft 2, is made on said first portion 4a of the ring-shaped body 4.

The mechanical seal is also provided with a thrust ring 7, which is coaxial with the ring-shaped body 4 and constrainable to the latter.

Advantageously, the thrust ring 7 is slidable in the axial direction with respect to the ring-shaped body 4, where the axial direction means a direction parallel to the axis 1a of central symmetry of the mechanical seal 1.

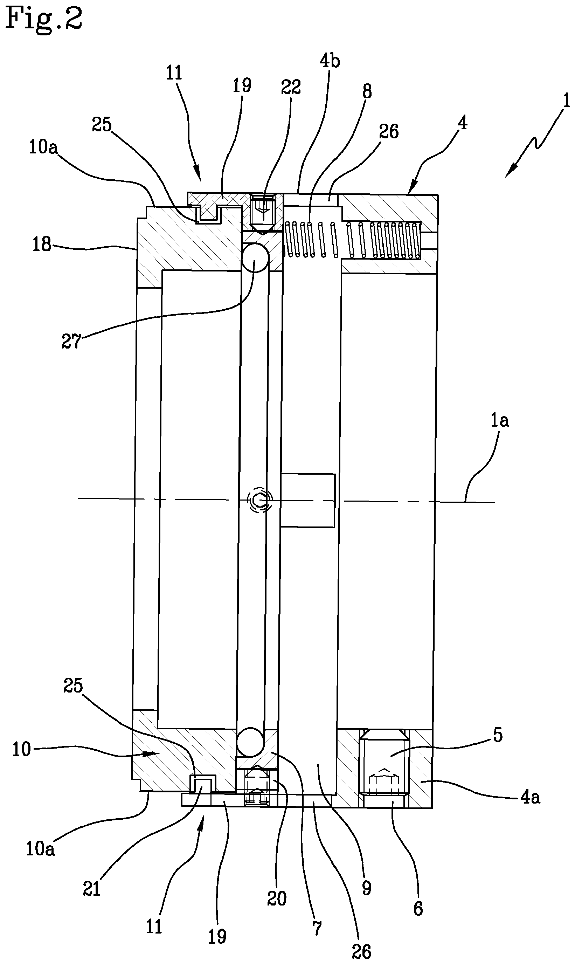

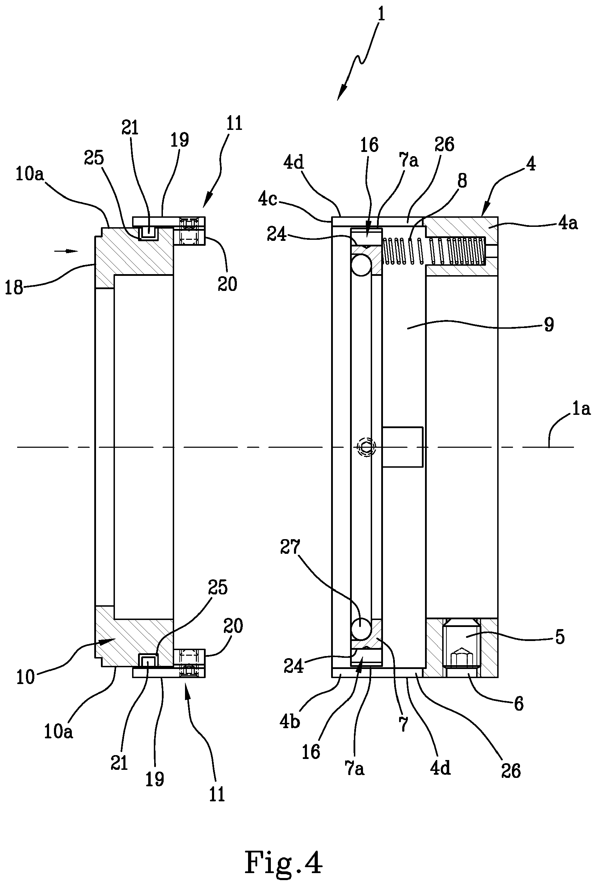

Between body 4 and thrust ring 7 there is a chamber 9 (Figures 2 and 4), inside which elastic elements 8 are housed. Such elastic elements 8 are, for example, helical springs that are compressed between the body 4 and the thrust ring 7, so as to exert a thrust on the latter in order to outdistance it from the first one. The springs are further compressed when the thrust ring 7 is forced to come closer to the ring-shaped body 4 in the axial direction.

The thrust ring 7 is slidably associated to the annular body 4, and it can slide axially onto the same.

Following the ring-shaped body 4 and the thrust ring 7, there is a rotating ring 10 positioned on the opposite side of the ring-shaped body 4 relative to the thrust ring 7 so that the latter is interposed between the other two components (Figure 1, 2 and 4).

The rotating ring 10, which is coaxial with the ring-shaped body 4 and the thrust ring 7, is the ring that makes the seal itself, by interacting by friction against the stationary ring 3, as shown in Figure 1, in such a way that the two circular crown side surfaces 18 are constantly in contact.

The rotating ring 10 is constrained to the thrust ring 7 via the first connection means 11 (Figures 4, 5a-5c).

In particular, the rotating ring 10 is rigidly constrained to the thrust ring 7 by means of said first connection means 11, in such a way as to form, once assembled, a single body capable of rotating about the axis and of translating axially in a compact manner, without axial sliding movements relative to one another. In other words, the rotating ring 10 and the thrust ring 7, once constrained by the first connection means 11, always maintain between them the same distance in the axial direction to form a single block, which, in addition to rotate together, translates without relative axial sliding movements.

These first connection means 11 (also visible in Figures 2, 3a, 3b and 4) comprise at least a setting plate 19 having a first swallowtail-shaped protuberance 20 and a second parallelepiped protuberance 21, both extending from the same face 19a of the setting plate 19. Because such first connection means 11 act not only to connect but also to transmit the rotation movement to the rotating ring, they may also be called sliding grab tab or key.

The second protuberance 21 may be a clip, a tooth or a plug separable from the plate 19.

The thrust ring 7 has, an outer peripheral surface thereof 7a, a plurality of radial grooves 16 (Figure 5) with a mating swallowtail shape for accommodating the first swallowtail-shaped protuberance 20 of the first connection means 11.

The setting plate 19 is constrained to the thrust ring 7 via a set screw 22 insertable inside a through cavity 23 fashioned axially along the swallowtail-shaped protuberance 20.

The set screw 22 of the first connection means 12 is oriented radially relative to the thrust ring 7. Its insertion inside the respective housing through cavity 23 causes it to be abutted against the lower base 24 of the swallowtail-shaped groove 16 of the thrust ring 7. Only the side wall of the respective cavity 23 is threaded, while the base 24 of the groove 16 has no thread. Therefore, continuing to screw the set screw 22 within the respective cavity 23, the relative movement between the screw and the swallowtail-shaped element continues, causing the lifting of the respective swallowtail-shaped element, and then of the plate 19 integrally formed with the swallowtail protuberance 20 in a radially outer direction relative to the thrust ring 7. Such lifting continues until the outer surface of the inclined side walls of the swallowtail-shaped element of the protuberance 20 abuts against the corresponding inner surface of the inclined side walls of the groove 16 of the thrust ring 7.

In this way, a reaction force is generated in a direction orthogonal to the inclined walls of the swallowtail, which therefore has a component which helps to increase the strength of the constrain between the first connection means 11 and the thrust ring 7.

The constraint force exerted by the small set screw 22 is then considerably increased thanks to the decomposition of the forces due to the particular geometry, the inclination of the walls, and the greater contact surface as compared to the swallowtail.

Therefore, using a small force permits to obtain a great resistance and strength.

Furthermore, the inclined wall geometry exerts a self-centering action and prevent any rotation of the swallowtail-shaped element around a radial axis, and then around the axis of the screw, while maintaining the position of the thrust ring 7 and avoiding misalignments and lateralizations.

As shown in Figures 5a-5c, the second protrusion 21 of the setting plate 19 is inserted within a blind cavity 25 fashioned on the outer surface 10a of the rotating ring 10.

The setting plate 19 is thus stably constrained to the thrust ring 7 and engaged with the rotating ring 10, thus creating a permanent constrain between these two components.

The machining on the rotating ring is limited to the small size of the blind cavity 25 formed on the outer peripheral surface 10a of the sealing ring 10, inside of which, as mentioned above, the second protuberance 21 of the setting plate 19 is inserted.

No other work on the outer surface of the rotating ring 10 has to be done, resulting in huge advantage in terms of robustness and strength of the mechanical seal as a whole.

In addition, the rotating ring 10 is integral with the thrust ring 7 and is therefore movable relative to the ring-shaped body 4, in particular is slidable in the axial direction so as to constantly maintain the contact between the sealing surfaces 18 of the rotating ring 10 and on the stationary ring 3.

To permit this axial sliding, the ring-shaped body 4 has on the side wall 4d, in particular on the second portion 4b, a plurality of open guides 26 (Figures 3b and 4) passing through the thickness of the second portion 4b and bounded only on three sides from the ring-shaped body 4.

In other words, the open guides 26 can be seen as open recesses provided along a peripheral, free ring-shaped edge 4c of the main ring-shaped body 4, in particular of the second portion 4b, facing towards the coupling side of the thrust ring 7 and of the rotating ring 10. These open grooves 26 extend along a direction parallel to the central axis of symmetry 1a of the mechanical seal 1, and hence of the ring-shaped body, from the ring-shaped edge 4c of the second portion 4b towards the first portion 4a of the ring-shaped body 4, in such a way as to be open to the outside, on the side facing towards the coupling side of the thrust ring 7 and of the rotating ring 10.

Within each open groove 26 a setting plate 19 is partially accommodatable and slidable (Figure 3b).

Not having other constraints in the axial direction, the rotating ring 10 may be consumed to a greater portion than the rotating rings of the commonly used mechanical seals, which have also a limit of sliding of the rotating rings themselves.

Therefore, the average life of a mechanical seal made in accordance with the disclosure is greater than the average life of a mechanical seal of known type. In other words, the travel by the rotating ring in the axial direction is greater, because there are no dimensional constraints imposed by surface working on the sealing ring, since there is no surface working requiring the extensive removal of material, but there are only small holes to realize the blind cavities 25, which does not weaken the structure.

The engagement of the setting plate 19 inside of the open guide 26, in particular the interaction between the height of the setting plate 19 and the height of the side wall of the open groove 26, allows the ring-shaped body 4 to drawn in rotation the rotating ring 10.

To improve the seal, it is also present a gasket 27, preferably a ring-shaped gasket, as an O-ring, which can be placed within the motor shaft 2 between the thrust ring 7 and the rotating ring 10. In particular, in the thrust ring 7 a seat 28 is formed for the O-ring, as shown in Figures 1, 2 and 4.

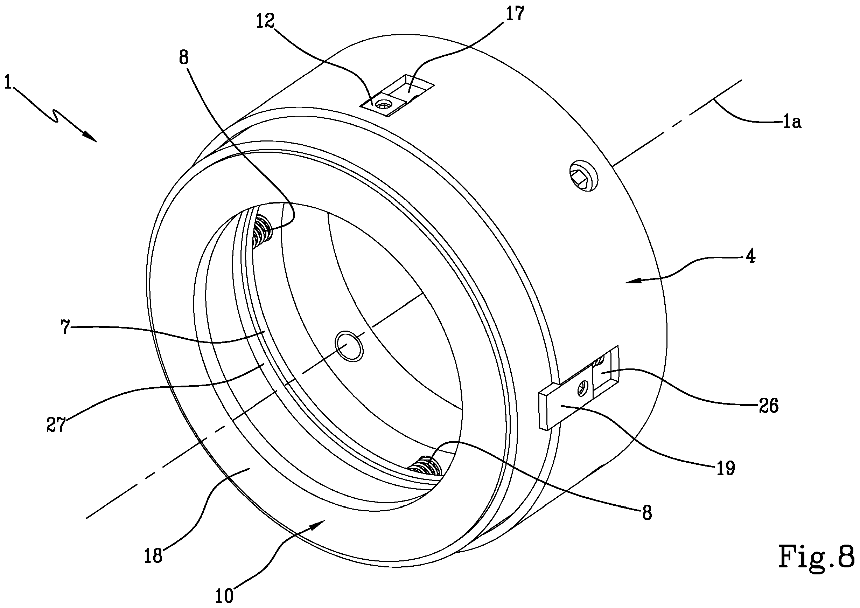

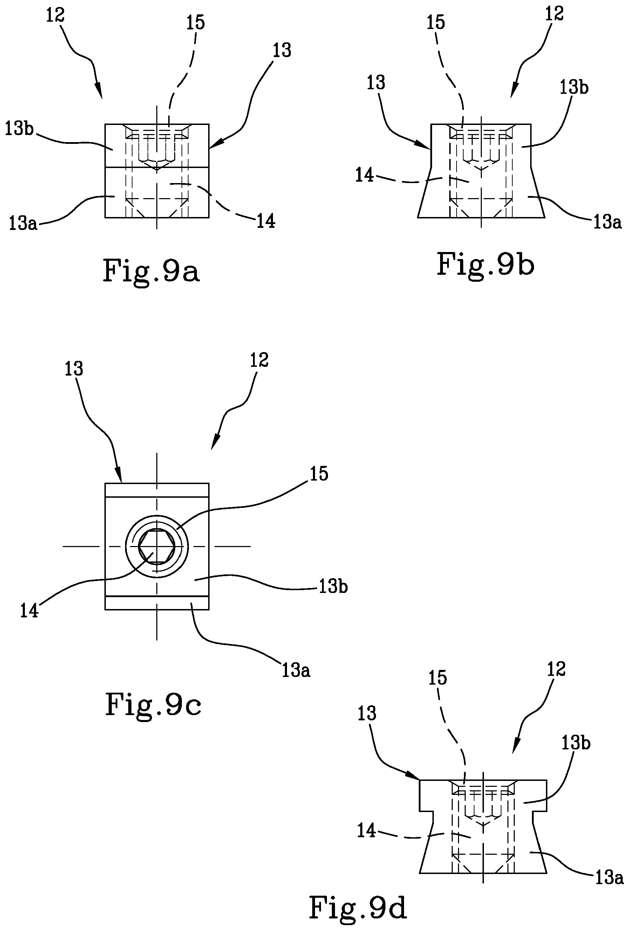

An alternative embodiment, shown in Figure 8, comprises a constraint between the thrust ring 7 and the ring-shaped body 4 by means of second connection means 12 (illustrated in detail in Figures 9a-9c and also visible in Figures 10a and 10c), which preferably include a retaining clip 13, or stop block, having a swallowtail-shaped base 13a and a parallelepiped top portion 13b.

As illustrated in Figure 8, this stop block 13 slides inside a respective slot or blind guide 17, formed within the ring-shaped body 4, which imposes the maximum axial excursion of the stop block 13, and thus limits the relative sliding between thrust ring 7 and the ring-shaped body 4 in the axial direction.

In this configuration, some radial grooves 16 of the thrust ring 7 with a mating swallowtail shape serve for accommodating a respective the base 13a of a respective first swallowtail-shaped clip.

The retaining clip 13 can be fixed stably to the thrust ring 7 by means of a set screw 14 (Figure 10c), insertable inside a through cavity 15 fashioned axially along the swallowtail-shaped clip 13 (Figures 9a-9d).

The effect of the interaction between set screw and swallowtail-shaped element of the second connection means 12 is the same of the first connection means 11.

In other words, the set screw 14 of the second connection means 12 is oriented radially relative to the thrust ring 7. Its insertion inside the respective housing through cavity 15 causes it to be abutted against the lower base 24 of the swallowtail-shaped groove 16 of the thrust ring 7.

Only the side wall of the respective cavity 15 is threaded, while the base 24 of the groove 16 has no thread. Therefore, continuing to screw the set screw 14 within the respective cavity 15, the relative movement between the screw and the swallowtail-shaped element continues, causing the lifting of the respective swallowtail-shaped element in a radially outer direction relative to the thrust ring 7. Such lifting continues until the outer surface of the inclined side walls of the swallowtail-shaped element of the clip 13 abuts against the corresponding inner surface of the inclined side walls of the groove 16 of the thrust ring 7.

In this way, a reaction force is generated in a direction orthogonal to the inclined walls of the swallowtail, which therefore has a component which helps to increase the strength of the constrain between the second connection means 12 and the thrust ring 7.

The constraint force exerted by the small set screw 14 is then considerably increased thanks to the decomposition of the forces due to the particular geometry, the inclination of the walls, and the greater contact surface as compared to the swallowtail.

Therefore, using a small constraining force permits to obtain a great resistance and strength.

Furthermore, the inclined wall geometry exerts a self-centering action and prevent any rotation of the swallowtail-shaped element around a radial axis, and then around the axis of the screw, while maintaining the position of the thrust ring 7 and avoiding misalignments and lateralizations.

The ring-shaped body 4 has a plurality of slots or blind guides 17 (Figures 8 and 10b), made at the second portion 4b. These blind guides 17 are through cavities through the thickness of the side wall 4d of the second portion 4b of the ring-shaped body 4. Within each slot or blind guide 17, the retaining clip 13 is partially accommodatable and slidable, in particular the parallelepiped upper portion 13b of the clip 13, to constrain the thrust ring 7 to the ring-shaped body 4.

Advantageously, each slot or blind guide 17 extends predominantly along a direction parallel to the axis 1a of the mechanical seal 1, and hence of the ring-shaped body 4, to allow the relative translational motion along said first axis 1a of the thrust ring 7 with respect to the ring-shaped body 4.

The travel of the thrust ring 7 is limited by the axial extent of the slot or blind guide 17, and also by the transverse dimensions of the upper potion 13b of the clip 13.

In this second configuration, the rotating ring 10 is also constrained to the main ring-shaped body 4, via its constrain with the thrust ring 7, which, as has already explained above, is in turn connected to the main ring-shaped body 4.

In this way, the rotating ring 10 is not disengaged from the main ring-shaped body 4, avoiding accidental disengagements of the rotating ring during the stages of assembly, disassembly or maintenance.

The described invention achieves important advantages.

The particular way by which the sealing ring is constrained to the thrust ring avoids any invasive surface treatment that structurally weakens the rotating ring and, more generally, the mechanical seal as a whole. The small holes formed on the outer surface of the sealing ring, to create the blind cavities inside which the second protuberance of the setting plate is inserted, maintains all the characteristics of robustness and strength of the rotating ring.

A solid ring is considerably more robust, able to withstand very high loads and to withstand higher pressure limits.

In this way, the performances of the seal are improved, which improves the seal performance and obtains a higher dimensional versatility and functional flexibility.

The connection element used in the described mechanical seal has the particular swallowtail-shaped geometry that allows keeping all the components in contact by applying only a small force, obtaining the same effect, which would occur by applying a force considerably higher than a traditional connection element, then with only radial distribution of forces.

Furthermore, the inclined walls of the swallowtail-shaped elements impose a self-centering action and prevent accidental misalignments and rotations between the various components.

Finally, the particular connection between the rotating ring and the other components offers more space to the axial travel of the rotating ring, extending the average life of the mechanical seal.

Therefore, the rotating ring has a greater wear margin, and thus can be consumed over a greater length at the same width of the rotating ring in the axial direction.

The seal no longer housed inside the rotating ring but placed in a seat of the thrust ring spares the useful length of the rotating ring for its wear margin, further helping to extend the life of the mechanical seal.

Not least, the indirect coupling between rotating ring and ring-shaped body, i.e., through the constraint of each of these components directly with the thrust ring, allows avoiding dangerous and disadvantageous disengagements between the rotating ring and the rest of the mechanical seal, so as to ensure maximum safety and manageability of the mechanical seal in any situation of use.

## Claims

1. A mechanical seal comprising:
- a ring-shaped body (4) constrainable to a shaft (2);
- a thrust ring (7), axially connectable to the ring-shaped body (4); elastic elements (8) being interposed between the ring-shaped body (4) and the thrust ring (7);
- a rotating ring (10), coaxial with the ring-shaped body (4) and adjacent to the thrust ring (7), so that the latter is interposed between the ring-shaped body (4) and the rotating ring (10);
**characterized in that** said rotating ring (10) is constrained to said thrust ring (7) via first connection means (11) comprising at least a setting plate (19) having a first swallowtail-shaped protuberance (20).

2. The mechanical seal according to the preceding claims, **characterized in that** said thrust ring (7) comprises, along an outer peripheral surface thereof (7a), a plurality of radial grooves (16) with a mating swallowtail shape.

3. The mechanical seal according to one of the preceding claims, **characterized in that** said first connection means (11) also comprise a second protuberance (21) which extends in elevation from the setting plate (19) in the same direction in which the first swallowtail-shaped protuberance (20) extends.

4. The mechanical seal according to the preceding claim, **characterized in that** said first swallowtail-shaped protuberance (20) of said setting plate (19) is engageable with said thrust ring (7), whilst said second protuberance (21) is engageable with said rotating ring (10) so as to stably and rigidly constrain said rotating ring (10) to said thrust ring (7), avoiding relative axial movements.

5. The mechanical seal according to the preceding claim, **characterized in that** said setting plate (19) is constrained to said thrust ring (7) via a set screw (22) insertable into a through cavity (23) fashioned axially along said setting plate (19) and said first swallowtail-shaped protuberance (20), whereas it is engaged with said rotating ring (10) by inserting said second protuberance (21) into a blind cavity (25) fashioned on the outer surface (10a) of said rotating ring (10).

6. Mechanical seal according to one of the preceding claims, **characterized in that** said ring-shaped body (4) has, on a lateral wall (4d) thereof, a plurality of open guides (26), inside each of which said setting plate (19) is partially accommodatable and slidable; each ring-shaped guide (26) passing through the thickness of the side wall (4d) of said ring-shaped body (4) and extending mainly along a direction parallel to the axis (1a) of said annular body (4), to allow a relative translation, along that axis (1a), of the rotating ring (10) with respect to the ring-shaped body (4).

7. The mechanical seal according to the preceding claim, **characterized in that** said rotating ring (10) is drawn in rotation by said ring-shaped body (4) via the engagement and interaction of said setting plate (19) inside said open guide (26).

8. The mechanical seal according to one of the preceding claims, **characterized in that** said thrust ring (7) is connected to the ring-shaped body (4) via second connection means (12) comprising a clip (13) having a swallowtail-shaped base (13a); said clip (13) being fixable to said thrust ring (7) by means of a set screw (14) insertable into a through cavity (15) fashioned axially along said swallowtail-shaped clip (13).

9. The mechanical seal according to preceding claim, **characterized in that** said thrust ring (7) comprises, along an outer peripheral surface thereof (7a), a plurality of radial grooves (16) with a mating swallowtail shape for accommodating a respective clip (13) having the swallowtail-shaped base (13a) or a respective first swallowtail-shaped protuberance (20).

10. The mechanical seal according to claim 8 or 9, **characterized in that** said ring-shaped body (4) has, on a lateral wall (4d) thereof, a plurality of slots (17), inside each of which an upper portion (13b) of a respective swallowtail-shaped clip (13) is partially accommodatable and slidable.

11. The mechanical seal according to the preceding claim, **characterized in that** each slot (17) passes through the thickness of the lateral wall (4d) of said ring-shaped body (4) and extends prevalently along a direction parallel to a central axis of symmetry (1a) of said ring-shaped body (4) to enable the relative translation, along said axis (1a), of the thrust ring (7) relative to the ring-shaped body (4), limited to the axial extent of the slot (17).

12. The mechanical seal according to one of the preceding claims, **characterized in that** said ring-shaped body (4) is constrainable to a motor shaft (2) via a plurality of grub screws (5) radially insertable into respective through cavities (6) radially formed in the ring-shaped body (4).

13. The mechanical seal according to one of the preceding claims, **characterized in that** it comprises at least one ring-shaped gasket (27) interposable between the thrust ring (7) and the rotating ring (10), accommodatable in a seat (28) formed in the thrust ring (7).

14. A connection means for mechanical seals according to any one of claims from 1 to 13, **characterised in that** said connection element comprises a setting plate (19) from which a first swallowtail-shaped protuberance (20) extends in elevation.

15. A connection means according to the preceding claim, **characterized in that** it comprises a second protuberance (21) which extends in elevation from the setting plate (19) in the same direction in which the first swallowtail-shaped protuberance (20) extends.

## Patentansprüche

1. Gleitringdichtung, umfassend:
- einen ringförmigen Körper (4), der mit einer Welle (2) verbunden werden kann;
- einen Druckring (7), der koaxial mit dem ringförmigen Körper (4) verbunden werden kann, wobei elastische Mittel (8) zwischen dem ringförmigen Körper (4) und dem Druckring (7) eingesetzt sind;
- einen Drehring (10), der koaxial zum ringförmigen Körper (4) und angrenzend an den Druckring (7) angeordnet ist, sodass dieser zwischen dem ringförmigen Körper (4) und dem Drehring (10) eingesetzt wird, **dadurch gekennzeichnet, dass** der Drehring (10) steif mit dem Druckring (7) mittels erster Verbindungsmittel (11) verbunden ist, umfassend mindestens eine Einstellplatte (19), aufweisend einen ersten schwalbenschwanzförmigen Vorsprung (20).

2. Gleitringdichtung nach den vorhergehenden Ansprüchen, **dadurch gekennzeichnet, dass** der Druckring (7) entlang einer außenseitigen Umfangsoberfläche (7a) eine Vielzahl an radialen Nuten (16) mit einer passenden Schwalbenschwanzform umfasst.

3. Gleitringdichtung nach einem der vorhergehenden Ansprüche, **dadurch gekennzeichnet, dass** die ersten Verbindungsmittel (11) zudem einen zweiten Vorsprung (21) umfassen, der sich von der Einstellplatte (19) in dieselbe Richtung nach oben erstreckt, in der sich der erste schwalbenschwanzförmige Vorsprung (20) erstreckt.

4. Gleitringdichtung nach dem vorhergehenden Anspruch, **dadurch gekennzeichnet, dass** der erste schwalbenschwanzförmige Vorsprung (20) der Einstellplatte (19) mit dem Druckring (7) in Eingriff gelangen kann, während der zweite Vorsprung (21) mit dem Drehring (10) in Eingriff gelangen kann, sodass der Drehring (10) stabil und steif mit dem Druckring (7) verbunden wird, was relative axiale Bewegungen vermeidet.

5. Gleitringdichtung nach dem vorhergehenden Anspruch, **dadurch gekennzeichnet, dass** die Einstellplatte (19) mit dem Druckring (7) mittels einer Einstellschraube (22) verbunden ist, die in einen Durchführungshohlraum (23) eingeführt werden kann, der axial entlang der Einstellplatte (19) und des ersten schwalbenschwanzförmigen Vorsprungs (20) ausgestaltet ist, wobei sie mit dem Drehring (10) in Eingriff gelangt, indem der zweite Vorsprung (21) in einen Blindhohlraum (25) eingefügt wird, der an der außenseitigen Oberfläche (10a) des Drehrings (10) ausgebildet ist.

6. Gleitringdichtung nach einem der vorhergehenden Ansprüche, **dadurch gekennzeichnet, dass** der ringförmige Körper (4) an einer seitlichen Wand (4d) eine Vielzahl an offenen Führungen (26) aufweist, wobei in einer jeden davon die Einstellplatte (19) teilweise aufnehmbar und verschiebbar ist, wobei eine jede ringförmige Führung (26) durch die Dicke der seitlichen Wand (4d) des ringförmigen Körpers (4) führt und sich vorwiegend entlang einer Richtung erstreckt, die parallel zur Achse (1a) des ringförmigen Körpers (4) verläuft, um eine relative Verschiebung des Drehrings (10) entlang der Achse (1a) zum ringförmigen Körper (4) zu ermöglichen.

7. Gleitringdichtung nach dem vorhergehenden Anspruch, **dadurch gekennzeichnet, dass** der Drehring (10) vom ringförmigen Körper (4) mittels des Eingriffs und der Interaktion der Einstellplatte (19) in die/der offene(n) Führung (26) in Drehung versetzt wird.

8. Gleitringdichtung nach einem der vorhergehenden Ansprüche, **dadurch gekennzeichnet, dass** der Druckring (7) an den ringförmigen Körper (4) mittels zweiter Verbindungsmittel (12) angeschlossen ist, umfassend eine Klammer (13), aufweisend eine schwalbenschwanzförmige Basis (13a), wobei die Klammer (13) am Druckring (7) mittels einer Einstellschraube (14) fixiert werden kann, die durch einen Durchführungshohlraum (15) eingefügt werden kann, der axial entlang der schwalbenschwanzförmigen Klammer (13) ausgestaltet ist.

9. Gleitringdichtung nach dem vorhergehenden Anspruch, **dadurch gekennzeichnet, dass** der Druckring (7) entlang einer außenseitigen Umfangsoberfläche (7a) eine Vielzahl an radialen Nuten (16) mit einer passenden Schwalbenschwanzform für die Aufnahme einer jeweiligen Klammer (13), aufweisend die schwalbenschwanzförmige Basis (13) oder einen jeweiligen ersten schwalbenschwanzförmigen Vorsprung (20), umfasst.

10. Gleitringdichtung nach Anspruch 8 oder 9, **dadurch gekennzeichnet, dass** der ringförmige Körper (4) an einer seitlichen Wand (4d) eine Vielzahl an Aussparungen (17) aufweist, wobei in einer jeden davon ein oberseitiger Abschnitt (13b) einer jeweiligen schwalbenschwanzförmigen Klammer (13) teilweise aufnehmbar und verschiebbar ist.

11. Gleitringdichtung nach dem vorhergehenden Anspruch, **dadurch gekennzeichnet, dass** eine jede Aussparung (17) durch die Dicke der seitlichen Wand (4d) des ringförmigen Körpers (4) führt und sich vorwiegend entlang einer Richtung erstreckt, die parallel zu einer mittigen Symmetrieachse (1a) des ringförmigen Körpers (4) verläuft, um die relative Verschiebung des Druckrings (7) entlang der Achse (1a) relativ zum ringförmigen Körper (4), begrenzt auf das axiale Maß der Aussparung (17), zu ermöglichen.

12. Gleitringdichtung nach einem der vorhergehenden Ansprüche, **dadurch gekennzeichnet, dass** der ringförmige Körper (4) mit einer Motorwelle (2) mittels einer Vielzahl an Gewindestiften (5) verbunden werden kann, die radial in jeweilige Durchführungshohlräume (6) eingefügt werden können, die radial im ringförmigen Körper (4) ausgebildet sind.

13. Gleitringdichtung nach einem der vorhergehenden Ansprüche, **dadurch gekennzeichnet, dass** sie mindestens eine ringförmige Dichtung (27) umfasst, die zwischen dem Druckring (7) und dem Drehring (10) eingesetzt werden kann und in einer Aufnahme (28) aufnehmbar ist, die im Druckring (7) ausgebildet ist.

14. Verbindungsmittel für Gleitringdichtungen nach einem der Ansprüche 1 bis 13, **dadurch gekennzeichnet, dass** das Verbindungselement eine Einstellplatte (19) umfasst, von der sich ein erster schwalbenschwanzförmiger Vorsprung (20) nach oben erstreckt.

15. Verbindungsmittel nach dem vorhergehenden Anspruch, **dadurch gekennzeichnet, dass** es einen zweiten Vorsprung (21) umfasst, der sich von der Einstellplatte (19) in dieselbe Richtung nach oben erstreckt, in der sich der erste schwalbenschwanzförmige Vorsprung (20) erstreckt.

## Revendications

1. Garniture de joint mécanique comprenant :
- un corps en forme d'anneau (4) solidaire d'un arbre (2) ;
- une rondelle de butée (7), pouvant être reliée axialement au corps en forme d'anneau (4) ; des éléments élastiques (8) étant interposés entre le corps en forme d'anneau (4) et la rondelle de butée (7) ;
- un anneau tournant (10), coaxial au corps en forme d'anneau (4) et adjacent à la rondelle de butée (7), de sorte que cette dernière soit interposée entre le corps en forme d'anneau (4) et l'anneau tournant (10) ; **caractérisée en ce que** ledit anneau tournant (10) est solidaire de ladite rondelle de butée (7) via des premiers moyens de raccordement (11) comprenant au moins une tôle de réglage (19) comportant une première saillie en forme de queue d'aronde (20).

2. Garniture de joint mécanique selon la revendication précédente, **caractérisée en ce que** ladite rondelle de butée (7) comprend, le long de sa surface périphérique extérieure (7a), une pluralité de rainures radiales (16) ayant une forme de queue d'aronde d'ajustement.

3. Garniture de joint mécanique selon l'une des revendications précédentes, **caractérisée en ce que** lesdits premiers moyens de raccordement (11) comprennent également une seconde saillie (21) se prolongeant en hauteur à partir de la tôle de réglage (19) dans la même direction dans laquelle se prolonge la première saillie en forme de queue d'aronde (20).

4. Garniture de joint mécanique selon la revendication précédente, **caractérisée en ce que** ladite première saillie en forme de queue d'aronde (20) de ladite tôle de réglage (19) peut se mettre en prise avec ladite rondelle de butée (7), pendant que ladite seconde saillie (21) peut se mettre en prise avec ledit anneau tournant (10) de manière à rendre solidaire stablement et rigidement ledit anneau tournant (10) sur ladite rondelle de butée (7), en évitant des mouvements axiaux correspondants.

5. Garniture de joint mécanique selon la revendication précédente, **caractérisée en ce que** ladite tôle de réglage (19) est solidaire de ladite rondelle de butée (7) via une vis de pression (22) pouvant être introduite dans une cavité passante (23) façonnée axialement le long de ladite tôle de réglage (19) et de ladite première saillie en forme de queue d'aronde (20), tandis qu'elle se met en prise avec ledit anneau tournant (10) en introduisant ladite seconde saillie (21) dans une cavité aveugle (25) façonnée sur la surface extérieure (10a) dudit anneau tournant (10).

6. Garniture de joint mécanique selon l'une des revendications précédentes, **caractérisée en ce que** ledit corps en forme d'anneau (4) comporte, sur sa cloison latérale (4d), une pluralité de guides ouverts (26), à l'intérieur desquels ladite tôle de réglage (19) peut partiellement être logée et coulisser ; chaque guide en forme d'anneau (26) passant à travers l'épaisseur de la cloison latérale (4d) dudit corps en forme d'anneau (4) et se prolongeant principalement le long d'une direction parallèle à l'axe (1a) dudit corps annulaire (4) pour permettre une translation relative le long de cet axe (1a) de l'anneau tournant (10) par rapport au corps en forme d'anneau (4).

7. Garniture de joint mécanique selon la revendication précédente, **caractérisée en ce que** ledit anneau tournant (10) est tiré en rotation par ledit corps en forme d'anneau (4) via l'engagement et l'interaction de ladite tôle de réglage (19) à l'intérieur dudit guide d'ouverture (26).

8. Garniture de joint mécanique selon l'une des revendications précédentes, **caractérisée en ce que** ladite rondelle de butée (7) est reliée au corps en forme d'anneau (4) via des seconds moyens de raccordement (12) comprenant une attache (13) comportant une base en forme de queue d'aronde (13a) ; ladite attache (13) pouvant être fixée à ladite rondelle de butée (7) au moyen d'une vis de pression (14) pouvant être introduite dans une cavité passante (15) façonnée axialement le long de ladite attache en forme de queue d'aronde (13).

9. Garniture de joint mécanique selon la revendication précédente, **caractérisée en ce que** ladite rondelle de butée (7) comprend, le long de sa surface périphérique extérieure (7a), une pluralité de rainures radiales (16) ayant une forme de queue d'aronde d'ajustement pour loger une attache (13) respective comportant la base en forme de queue d'aronde (13a) ou une première saillie respective (20) en forme de queue d'aronde.

10. Garniture de joint mécanique selon la revendication 8 ou 9, **caractérisée en ce que** ledit corps en forme d'anneau (4) comporte, sur sa cloison latérale (4d), une pluralité de fentes (17), à l'intérieur desquelles une partie supérieure (13b) d'une attache en forme de queue d'aronde (13) respective peut partiellement être logée et coulisser.

11. Garniture de joint mécanique selon la revendication précédente, **caractérisée en ce que** chaque fente (17) passe à travers l'épaisseur de la cloison latérale (4d) dudit corps en forme d'anneau (4) et se prolonge principalement le long d'une direction parallèle à un axe central de symétrie (1a) dudit corps en forme d'anneau (4) pour permettre la translation relative, le long dudit axis (1a) de la rondelle de butée (7) par rapport au corps en forme d'anneau (4), limitée à l'extension axiale de la fente (17).

12. Garniture de joint mécanique selon l'une des revendications précédentes, **caractérisée en ce que** ledit corps en forme d'anneau (4) est solidaire d'un arbre de moteur (2) via une pluralité de vis sans tête (5) pouvant s'introduire radialement dans des cavités passantes (6) respectives formées radialement dans le corps en forme d'anneau (4).

13. Garniture de joint mécanique selon l'une des revendications précédentes, **caractérisée en ce qu'**elle comprend au moins un joint en forme d'anneau (27), pouvant s'interposer entre la rondelle de butée (7) et l'anneau tournant (10), pouvant être logé dans un siège (28) formé dans la rondelle de butée (7).

14. Moyen de raccordement pour garnitures de joint mécanique selon l'une quelconque des revendications de 1 à 13, **caractérisé en ce que** ledit élément de raccordement comprend une tôle de réglage (19) de laquelle une première saillie en forme de queue d'aronde (20) se prolonge en hauteur.

15. Moyen de raccordement selon la revendication précédente, **caractérisé en ce qu'**il comprend une seconde saillie (21) se prolongeant en hauteur à partir de la tôle de réglage (19) dans la même direction dans laquelle se prolonge la première saillie en forme de queue d'aronde (20).
